Europäisches Patentamt

European Patent Office

Office européen des brevets

(19)

(11) Publication number: **0 030 976**
**B1**

(12) EUROPEAN PATENT SPECIFICATION

(45) Date of publication of patent specification: **22.08.84**

(51) Int. Cl.³: **B 23 K 7/08**

(21) Application number: **79900684.6**

(22) Date of filing: **20.06.79**

(86) International application number:
**PCT/JP79/00157**

(87) International publication number:
**WO 80/02813 24.12.80 Gazette 80/29**

(54) Method of and device for conditioning the surface of steel stock.

(43) Date of publication of application:
**01.07.81 Bulletin 81/26**

(45) Publication of the grant of the patent:
**22.08.84 Bulletin 84/34**

(84) Designated Contracting States:
**FR**

(56) References cited:
**DE-A-2 529 154**
**JP-B-45 000 477**
**JP-B-52 042 414**

(73) Proprietor: **SUMITOMO METAL INDUSTRIES, LTD.**
**15, Kitahama 5-chome Higashi-ku Osaka-shi, Osaka, 541 (JP)**

(72) Inventor: **HIROSHIMA, Tatsuo Sumitomo Metal Industries, Ltd.**
**3, Nishinagasuhondori 1-chome Amagasaki-shi Hyogo 660 (JP)**
Inventor: **SAKAMOTO, Takahide Sumitomo Metal Industries, Ltd**
**3, Nishinagasuhondori 1-chome Amagasaki-shi Hyogo 660 (JP)**

(74) Representative: **Weinstein, Zinovi et al Cabinet Z. WEINSTEIN 20, Avenue de Friedland F-75008 Paris (FR)**

# Description

The present invention relates to a method and apparatus for conditioning of surface flaws of a red-hot steel material.

In conditioning of surface flaws of a red-hot steel material such, for example, as a slab, a sheet bar or the like, immediately after delivered from a hot rolling mill, it is required to detect position and size of each flaw, to properly mark the detected flaw before forwarding the material to the subsequent conditioning step, and to quickly and properly treat the marked flaw.

Many apparatuses such as an optical flaw detector, an ultrasonic flaw detector, and eddy current flaw detector and the like are practically applied in detecting surface flaws of a hot steel material such as a slab. In each of these apparatuses, it is necessary to accurately mark the detected flaws in order to properly remove the flaws in the subsequent step. The most suitable method for removing surface flaws of the hot steel material is scarfing. In order to carry out quickly a scarfing operation on a transfer line, it is necessary to form a molten pool instantaneously on the surface of the steel material.

In the case of surface flaw inspection of a cold steel material, many marking methods using such as paint, powder, label, grinding and the like can be applied and many apparatuses therefore have been devised. On the other hand, a marking method applicable to surface flaws of a red-hot steel material is to mark with a special paint. However, since the red-hot steel material is liable to form scales on the surface which are readily flaked during transfer, this marking method has the disadvantage that the marking is made indistinct by flaking out of the scales after transfer.

For instance, DE—A—1 527 644, DE—A— 2 529 154 and JP—B2—52—42414 disclose apparatuses for marking metal material by using label, colour paint, and projections formed by a chisel, respectively. In particular, JP—B2—52—42414 discloses a method of partial scarfing for removal of flaws on the surface of a steel piece. In this method, firstly, a projection having a small heat capacity is formed by a chisel at the position to be preheated in order to facilitate scarfing. Secondly, the projection is melted by a torch.

It is an object of the present invention to obviate the above drawbacks of known methods and apparatuses.

In this purpose, the present invention relates to a method for conditioning of surface flaws of steel, characterized in that it comprises the steps of detecting a surface flaw of red-hot steel material, driving partially into said flaw steel nails in a number related to the size of said flaw, and performing scarfing conditioning of said flaw starting from the protruding nails.

The invention also relates to an apparatus for conditioning of surface flaws of steel, characterized in that it comprises a flaw detecting unit for detecting a surface flaw of a red-hot steel material, a nail marking unit for driving steel nails partially into said flaw in response to a signal from said flaw detecting unit, and a scarfing unit for performing scarfing conditioning of the marked flaw.

In order to quickly condition the flaw of a red-hot steel material on a transfer line, it is necessary to produce a molten pool instantaneously on the surface of the steel material. According to the present invention, since the steel nail driven into the red-hot steel material is heated by the potential heat of the steel material and has its head protruded from the surface of the steel material, the required molten pool can be instantaneously produced by melting the nails upon conditioning of the flaw by scarfing.

The above and other objects, features and advantages of the present invention will be apparent from the following description of the preferred embodiment thereof, taken in conjunction with the drawings, wherein:

Figure 1 is a schematic block diagram of an apparatus for practising the method according to the present invention;

Figures 2A and 2B are perspective views of different types of the marking nail for use in the method and apparatus according to the present invention;

Figure 3 is a perspective view of a cartridge holding the nails;

Figure 4A is an illustration of the condition of the nail immediately after the beginning of the scarfing operation;

Figure 4B is an illustration of a molten pool produced by melting the nail; and

Figure 5 is a side view of an embodiment of the marking unit according to the present invention.

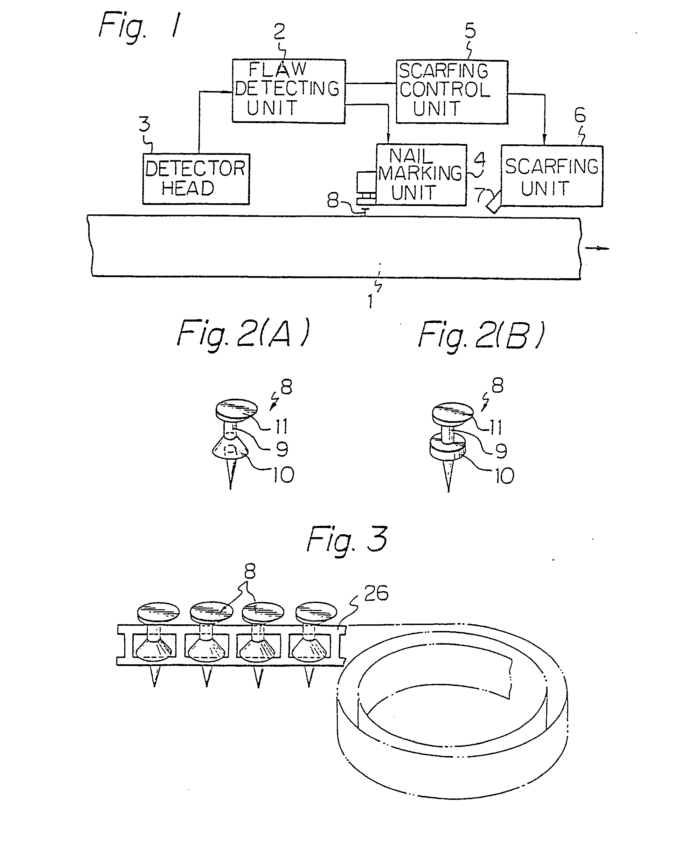

Referring now to the drawings, particularly to Figure 1, reference numeral 1 denotes a red-hot steel material, 2 denotes a flaw detecting unit, 3 denotes a detector head, 4 denotes a nail marking unit, 5 denotes a scarfing control unit, 6 denotes a scarfing unit, 7 denotes a scarfing torch and 8 denotes a nail of steel for marking a flaw. These units are incorporated into an apparatus for carrying out the method according to the present invention, which is disposed above a transfer line of the red-hot steel material 1 and movably in the transfer direction thereof.

A flaw on the red-hot steel material 1 on the transfer line is detected with the detector head 3, connected to the detecting unit 2. The output signal from the detecting unit 2 is applied to the marking unit 4 with a delay time determined by the distance between the detector head 3 and the nail marking unit 4 and by the transfer speed of the red-hot steel material 1, thereby causing an accurate marking of a detected flaw by the steel nail 8. The output signal from the flaw detecting unit 2 is applied also to the scarfing control unit 5 which transmits a control signal to the scarfing unit 6 so as to start its scarfing operation with a delay time determined by the distance between the detector head 3 and the scarfing unit 6, by the transfer speed of the red-hot steel material 1, and by the marking time. Accordingly, the scarfing unit 6 is actuated when the scarfing torch is in a position accurately opposite to the head of a nail 8.

A characteristic feature of the present invention resides in the nail 8 of steel which is used for marking flaws. The steel nail 8 is driven into the flaw portion on the surface of the steel material 1 in the number related to the length of the detected flaw (the length in the advancing direction of the red-hot steel material 1 or in the scanning direction of the detector head 3).

The steel nail 8 used in the present invention for flaw marking is provided at an intermediate portion of its shaft 9 with a flange 10 of an umbrella-shape (see Figure 2A) or of a disk-shape (see Figure 2B). The flange 10 functions as a stopper when the nail is driven into the red-hot steel material 1. The nail 8 has a head 11 at the top of the shaft 9. The nail head 11 is of an elliptical form which is thinned at an end of its major axis so as to be instantaneously melted when scarfing the nail 8 with the scarfing torch 7.

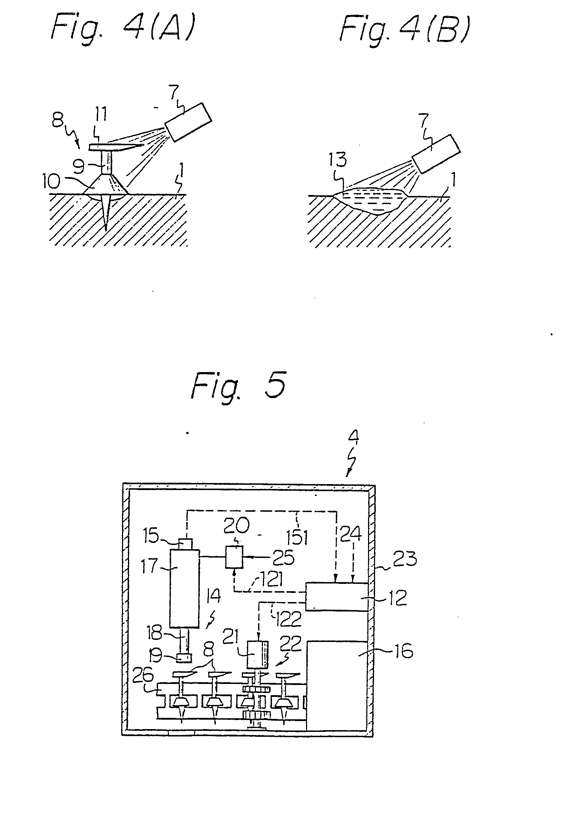

When the nail 8 is driven into the flaw of the steel material, the flange 10 acts as a stopper so that the portion of the nail 8 upper than the flange 10 is protruded above the surface of the steel material, and the protruded portion of the nail instantaneously forms the molten pool upon scarfing. In scarfing operation, as shown in Figure 4A, when subjected to the flame from the scarfing torch 7, the thinned portion of the nail head 11 is instantaneously melted and further the nail 8 itself which has been heated beforehand by the red-hot steel material 1 is melted quickly and forms a molten pool 13 thereabout as shown in Figure 4B.

The driving depth of only 5 to 6 mm of the nail 8 is sufficient. Accordingly, even if the material of the nail 8 is different from that of the steel 1, the nail 8 is removed by scarfing and there is no possibility of causing segregation on the surface of the steel material 1 by the nail 8.

An embodiment of the nail marking unit 4 will now be described with reference to Figure 5. When a surface flaw detected by the scanning of the detector head 3 is found to require conditioning, a control unit 12 receives a marking pulse 24 from the flaw detecting unit 2 and a signal 151 of a rod position detector 15 of a nail driving cylinder 17 and applies a nail drive operation signal 121 delayed for a time required to coincide the flaw position to a driving position of a marker 14. The marker 14 is provided with a header 19 at the lower end of a piston rod 18 of the nail driving cylinder 17 disposed vertically downwardly and with the rod position detector 15 at the upper end of the cylinder 17, and actuates the cylinder 17 with an electromagnetic valve 20 connected to said control unit 12. A nail feeder 22 comprises a cartridge 16 holding a tape 26 on which a number of nails 8 are stuck and a feeding motor 21. These members are all mounted inside a heat resisting case 23.

When the flaw detected by the detector head 3 is found to require conditioning, the control unit 12 of the nail marking unit 4 receives the marking pulse 24 applied from the flaw detecting unit 2 and, only when the rod 18 is at a top dead center, supplies a compressed air 25 to the nail driving cylinder 17 through the electromagnetic valve 20. The valve opening signal 121 to the electromagnetic valve 20 is delayed for a predetermined length of time by a delay circuit (not shown). The compressed air 25 is supplied to the cylinder 17 by the valve opening signal 121, whereby the rod 18 descends and the header 19 thereof drives one of the nails 8 positioned underneath thereof to the accurate position of the flaw of the red-hot steel material 1. When the rod position detector 151 detects the return of the ascending rod 18 to the top dead center, the output 151 from the detector 15 is applied to the control unit 12 which applies a command 122 to actuate the motor 21 so as to advance the tape 26 contained in the cartridge 16 by one frame and to cause the next one of the nails 8 to stand at the operating position of the marker 14.

When the marking of the flaw is finished by driving the nail to the flaw position of the red-hot steel material 1 as described above, the scarfing unit 6 is actuated by the command signal from the scarfing control unit 5 to condition the flaw by scarfing.

According to the apparatus of the present invention, a surface flaw of a red-hot steel material is detected by the flaw detecting unit, the nail marking unit is acuated by the detection signal from the detecting unit to automatically drive a nail into the flaw, and the scarfing unit is succeedingly actuated by the command signal to condition the flaw by scarfing. Therefore, the present invention has a great industrial applicability in that a series of operations such as detection, marking, and scarfing conditioning of a surface flaw of a red-hot steel material can be carried out on a transfer line without changing the speed thereof.

## Claims

1. A method for conditioning of surface flaws of steel, characterized in that it comprises the steps of:
   detecting a surface flaw of a red-hot steel material (1);
   driving partially into said flaw steel nails (8) in a number related to the size of said flaw; and
   performing scarfing conditioning of said flaw starting from the protruding nails (8).

2. An apparatus for conditioning of surface flaws of steel, characterized in that it comprises:

a flaw detecting unit (2) for detecting a surface flaw of a red-hot steel material (1);

a nail marking unit (4) for driving steel nails (8) partially into said flaw in response to a signal from said flaw detecting unit (2); and

a scarfing unit (6) for performing scarfing conditioning of the marked flaw.

3. An apparatus for conditioning of surface flaws of steel as set forth in claim 2, characterized in that said steel nail (8) is provided at an intermediate portion of its shaft (9) with an umbrella- or a disk-shaped flange (10) and at the top thereof with a head (11) of an elliptical form which is thinned at an end of the major axis thereof.

4. An apparatus for conditioning of surface flaws of steel as set forth in claim 2 or 3, characterized in that said steel nails (8) are held in a tape (26) with a predetermined distance from one another and in that said tape (6) is contained in a cartridge.

**Revendications**

1. Une procédé de conditionnement de défauts de surface d'acier, caractérisé en ce qu'il comprend les opérations consistant:

à détecter un défaut de surface d'une matière en acier chauffée au rouge (1);

à enfoncer partiellement, dans ledit acier à défauts des clous (8) en un nombre dépendant de la grandeur dudit défaut; et

à exécuter un traitement de décriquage dudit défaut à partir des clous saillants (8).

2. Un appareil de conditionnement de défauts de surface d'acier, caractérisé en ce qu'il comprend:

une unité de détection de défauts (2) pour déceler un défaut de surface d'une matière en acier portée au rouge (1);

une unité de marquage à clous (4) pour enfoncer des clous d'acier (8) partiellement dans ledit défaut en réponse à un signal de ladite unité de détection de défauts (2); et

une unité de décriquage (6) pour exécuter le traitement de décriquage du défaut marqué.

3. Un appareil de conditionnement de défauts de surface d'acier, tel qu'exposé dans la revendication 2, caractérisé en ce que ledit clou d'acier (8) est pourvu, en une partie intermédiaire de son fût (9), d'un rebord en forme de parapluie ou de disque (10) et, au sommet de celui-ci, d'une tête (11) d'une forme elliptique qui est amincie à une extrémité du grand axe de celle-ci.

4. Un appareil de conditionnement de défauts de surface d'acier, tel qu'exposé dans la revendication 2 ou 3, caractérisé en ce que lesdits clous d'acier (8) sont maintenus dans un ruban (26) à une distance prédéterminée les uns des autres et en ce que ledit ruban (26) est contenu dans une cartouche.

**Patentansprüche**

1. Ein Verfahren zur Behandlung von Stahloberflächenfehlern, dadurch gekennzeichnet, dass es folgende Schritte umfasst:

Ermittlung eines Oberflächenfehlers an einem rot heissen Stahlwerkstoff (1);

teilweises Eintreiben, in den besagten fehlerhaften Stahl, von Nägeln (8) in einer mit der Grösse des besagten Fehlers im Zusammenhang stehenden Anzahl; und

ausgehend von dem vorspringenden Nägeln (8), Durchführung einer rissbeseitigungsartigen Behandlung des besagten Fehlers.

2. Ein Gerät zur Behandlung von Stahloberflächenfehlern, dadurch gekennzeichnet, das es folgendes umfasst:

eine Fehlersucheinheit (2) zum Auffinden eines Oberflächenfehlers an einem rot heissen Stahlwerkstoff (1);

eine Nägel verwendende Anzeichnungseinheit (4) zum teilweisen Eintreiben von Stahlnägeln (8) in den besagten Fehler beim Ansprechen auf ein von der Fehlersucheinheit (2) abgegebenes Signal;

eine Rissbeseitigungseinheit (6) zur Durchführung einer rissbeseitigungsartigen Behandlung des angezeichneten Fehlers.

3. Ein Gerät zur Behandlung von Stahloberflächenfehlern gemäss Anspruch 2, dadurch gekennzeichnet, dass der besagte Stahlnagel (8) in einem Zwischenbereich seines Schaftes (9) mit einem Regenschirm- bzw. Scheibenartigenflansch (10) und an seinem Oberende mit einem Koff (11) der an einem Ende seiner Hauptachse verdünnt ist, versehen ist.

4. Ein Gerät zur Behandlung von Stahloberflächenfehlern gemäss Anspruch 2 oder 3, dadurch gekennzeichnet, dass die besagten Stahlnägel (8) mit einem vorbestimmten Abstand voneinander in einem Band (26) festgehalten werden und dass das besagte Band (26) in einer Kartusche enthalten ist.

## Fig. 1

```
                    ┌──────────┐        ┌──────────┐
                    │  FLAW    │   2    │ SCARFING │   5
                    │DETECTING │        │ CONTROL  │
                    │  UNIT    │        │   UNIT   │
                    └──────────┘        └──────────┘
   ┌──────────┐  3
   │ DETECTOR │              ┌──────────┐    ┌──────────┐
   │   HEAD   │              │   NAIL   │ 4  │ SCARFING │  6
   └──────────┘              │ MARKING  │    │   UNIT   │
                             │   UNIT   │    └──────────┘
                        8    └──────────┘ 7
```

1

## Fig. 2(A)

8
11
9
10

## Fig. 2(B)

8
11
9
10

## Fig. 3

8
26

Fig. 4(A)

Fig. 4(B)

Fig. 5